# EUROPÄISCHE PATENTSCHRIFT

(11) **EP 4 037 867 B1**
(45) Veröffentlichungstag und Bekanntmachung des Hinweises auf die Patenterteilung: **17.01.2024**
(21) Anmeldenummer: 20820111.1
(22) Anmeldetag: 03.12.2020
(51) Int. Cl.: B32B 7/12, B23K 35/00, C04B 37/02, B32B 15/00, B23K 35/02, B32B 15/01, B32B 15/04

(54) **LOTMATERIAL, VERFAHREN ZUR HERSTELLUNG EINES SOLCHEN LOTMATERIALS UND VERWENDUNG EINES SOLCHEN LOTMATERIALS ZUR ANBINDUNG EINER METALLSCHICHT AN EINE KERAMIKSCHICHT**
SOLDER MATERIAL, METHOD FOR PRODUCING A SOLDER MATERIAL OF THIS TYPE AND USE OF A SOLDER MATERIAL OF THIS TYPE IN ORDER TO CONNECT A METAL LAYER TO A CERAMIC LAYER
MATÉRIAU DE SOUDURE, PROCÉDÉ DE FABRICATION D'UN TEL MATÉRIAU DE SOUDURE ET UTILISATION D'UN TEL MATÉRIAU DE SOUDURE POUR RELIER UNE COUCHE MÉTALLIQUE À UNE COUCHE CÉRAMIQUE

(30) Priorität: 19.12.2019 DE 102019135171
(43) Veröffentlichungstag der Anmeldung: 10.08.2022
(73) Patentinhaber: Rogers Germany GmbH, 92676 Eschenbach (DE)
(72) Erfinder: BRITTING, Stefan, 91220 Schnaittach (DE); WELKER, Tilo, 91284 Neuhaus (DE); SCHMIDT, Karsten, 92676 Eschenbach (DE)
(74) Vertreter: Müller Schupfner & Partner Patent- und Rechtsanwaltspartnerschaft mbB
(86) Internationale Anmeldenummer: PCT/EP2020/084473
(87) Internationale Veröffentlichungsnummer: WO 2021/122036

(56) Entgegenhaltungen:
- EP-A1- 0 342 506
- EP-A1- 0 380 200
- DE-A1-102015 108 668
- US-A1- 2012 063 911

## Beschreibung

Die vorliegende Erfindung betrifft ein Lotmaterial, ein Verfahren zur Herstellung eines solchen Lotmaterials und eine Verwendung eines solchen Lotmaterials zur Anbindung einer Metallschicht an eine Keramikschicht.

Metall-Keramik-Substrate sind beispielsweise als Leiterplatten oder Platinen aus dem Stand der Technik hinlänglich bekannt, beispielsweise aus der DE 10 2013 104 739 A1, der DE 19 927 046 B4 und der DE 10 2009 033 029 A1. Typischerweise werden auf einer Bauteilseite des Metall-Keramik-Substrats Anschlussflächen für elektrische Bauteile und Leiterbahnen angeordnet, wobei die elektrischen Bauteile und die Leiterbahnen zu elektrischen Schaltkreisen zusammenschaltbar sind. Wesentliche Bestandteile der Metall-Keramik-Substrate sind eine Isolationsschicht, die bevorzugt aus einer Keramik gefertigt ist, und wenigstens eine an die Isolationsschicht angebundene Metallschicht. Wegen ihrer vergleichsweise hohen Isolationsfestigkeiten haben sich aus Keramik gefertigte Isolationsschichten in der Leistungselektronik als besonders vorteilhaft erwiesen. Durch eine Strukturierung der Metallschicht können sodann Leiterbahnen und/oder Anschlussflächen für die elektrischen Bauteile realisiert werden.

Voraussetzung für das Bereitstellen eines solchen Metall-Keramik-Substrats ist eine dauerhafte Anbindung der Metallschicht an die Keramikschicht. Neben einem sogenannten Direktanbindungsverfahren, d. h. einem DCB- oder DAB-Verfahren, ist es aus dem Stand der Technik bekannt, die Metallschicht über ein Lotmaterial an die Keramikschicht anzubinden.

Unter einem Aktivlotverfahren, z. B. zum Verbinden von Metallschichten oder Metallfolien, insbesondere auch von Kupferschichten oder Kupferfolien, mit Keramikmaterial, ist ein Verfahren zu verstehen, welches speziell zum Herstellen von Metall-Keramik-Substraten verwendet wird. Dabei wird bei einer Temperatur zwischen ca. 650-1000°C eine Verbindung zwischen einer Metallfolie, beispielsweise einer Kupferfolie, und einem Keramiksubstrat, beispielsweise einer Aluminiumnitrid-Keramik, unter Verwendung eines Hartlots hergestellt, welches zusätzlich zu einer Hauptkomponente wie Kupfer, Silber und/oder Gold auch ein Aktivmetall enthält. Dieses Aktivmetall, welches beispielsweise wenigstens ein Element aus der Gruppe Hf, Ti, Zr, Nb, Ce ist, stellt durch chemische Reaktion eine Verbindung zwischen dem Lot und der Keramik her, während die Verbindung zwischen dem Lot und dem Metall eine metallische Hartlöt-Verbindung ist.

Aus der US 2018 0 169 796 A ist ein dreischichtiges Lotmaterial bekannt, bei dem die Außenlagen durch zwei Schichten aus Aktivmetall gebildet werden. Die Folien sind dabei dicker als 100 µm.

Aus der US 6,722,002 B1 ist ein Verfahren beschrieben, bei dem zur Ausbildung einer Lotfolie eine Titanfolie durch Walzen zwischen Kupfer bzw. Kupfer/Nickel-Folien angeordnet wird. Dabei liegen die Foliendicken oberhalb von 100 µm.

In der US 3,981,429 ist eine mehrschichtige Lötfolie beschrieben, bei der eine Titanschicht eine Dicke aufweist, die dünner ist als 25 µm. Diese Lötfolie soll Verwendung im Flugzeugbau finden, insbesondere beim Anbinden an eine Wabenstruktur. Aus der EP0380200A1 ist eine Folie als Lotmaterial zum Anbinden einer Metallschicht an eine Keramikschicht offenbart, umfassend ein Basismaterial aus Nickel oder Nickellegierung und Aktivmaterial aus Titan.

Es ist eine Aufgabe der vorliegenden Erfindung, ein Lotmaterial bereitzustellen, das gegenüber den aus dem Stand der Technik bekannten Lotmaterialen verbessert ist, insbesondere in Hinblick auf die Anbindung einer Metallschicht an eine Keramikschicht.

Die vorliegende Erfindung löst diese Aufgabe mit einem Lotmaterial gemäß Anspruch 1, einem Verfahren zur Herstellung des Lotmaterials gemäß Anspruch 9 und mit der Verwendung des Lotmaterials gemäß Anspruch 11. Weitere Ausführungsformen sind den abhängigen Ansprüchen und der Beschreibung zu entnehmen.

Gemäß einem ersten Aspekt der vorliegenden Erfindung ist ein Lotmaterial für das Anbinden einer Metallschicht an eine Keramikschicht, insbesondere zur Ausbildung eines Metall-Keramik-Substrats als Träger für elektrische Bauteile, vorgesehen, umfassend:
- ein Basismaterial und
- ein Aktivmetall,

wobei das Lotmaterial eine Folie ist, die das Basismaterial in einer ersten Schicht und das Aktivmetall in einer zweiten Schicht aufweist, und
wobei die Folie eine Gesamtdicke aufweist, die kleiner als 25 µm und besonders bevorzugt kleiner als 15 µm ist.

Gegenüber den aus dem Stand der Technik bekannten Lotmaterialien ist es erfindungsgemäß vorgesehen, dass die Gesamtdicke der Folie kleiner als 25 µm und besonders bevorzugt kleiner als 15 µm ist. Dies erweist sich insbesondere nicht nur deshalb als vorteilhaft, weil durch die reduzierte Dicke des Lotmaterials Material eingespart werden kann, sondern zudem das Aktivmetall einen vergleichsweise geringen Abstand zur Keramikschicht und/oder Metallschicht zu überbrücken hat, um dort eine Reaktionsschicht auszubilden, die eine Anbindung im Rahmen des AMB-Prozesses ermöglicht. Insbesondere hat es sich als besonders vorteilhaft herausgestellt, derartige Lotmaterialien dazu zu verwenden, Metallschichten an Keramikschichten zu binden, um dadurch Metall-Keramik-Substrate auszubilden, die als Träger für elektrische Bauteile dienen. Diese Träger bzw. diese Metall-Keramik-Substrate sind im besonderen Maße sowohl während der Fertigung als auch im Betrieb thermischen Belastungen ausgesetzt, die typischer Weise aufgrund der unterschiedlichen Ausdehnungskoeffizienten von Metall und Keramik zu vergleichsweise hohen thermomechanischen Spannungen führen, die das Metall-Keramik-Substrat wiederum schädigen bzw. die Lebensdauer verkürzen können. In entsprechender Weise sind besondere Anforderungen an das hier verwendete Lotmaterial gestellt, das für die Anbindung einer Metallschicht an eine Keramikschicht vorgesehen ist. Es hat sich dabei herausgestellt, dass derartig dünne Lotmaterialien mit einer ersten Schicht aus Aktivmaterial und einer zweiten Schicht aus einem Basismaterial als Folie einsetzbar sind, um eine dauerhafte und stabile Bindung zwischen einer Metallschicht und einer Keramikschicht zu realisieren.

Weiterhin ist es vorzugsweise vorgesehen, dass die Gesamtdicke einen Wert zwischen 4 und 25 µm und besonders bevorzugt zwischen 6 und 15 µm annimmt. Es hat sich herausgestellt, dass als Folien ausgebildete Lotmaterialien mit solchen Dicken ausreichend dick sind, um prozesssicher eine Verbindung zwischen der Keramikschicht und der Metallschicht zu realisieren. Als besonders vorteilhaft haben sich die angegebenen Gesamtdicken für solche Folien bzw. Lotmaterialen herausgestellt, bei denen äußersten Schichten, beispielsweise die erste und die dritte Schicht bzw. eine abschließende Schutzschicht, aktivmetallfrei sind.

Beispiele für ein Aktivmetall sind Titan (Ti), Zirkonium (Zr), Hafnium (Hf), Chrom (Cr), Niob (Nb), Cer (Ce) und Vanadium (V). Insbesondere handelt es sich bei dem Basismaterial um ein metallbasiertes Basismaterial, vorzugsweise um ein silberbasiertes oder ein kupferbasiertes Basismaterial. In einem silberbasierten Basismaterial ist Silber die Hauptkomponente, d. h. der Bestandteil mit dem bezüglich der Gewichtsprozente höchsten Anteil, während in einem kupferbasierten Basismaterial Kupfer die Hauptkomponente ist. Beispiele für ein silberbasiertes Basismaterial sind AgCu, insbesondere AgCu28, AgCuln, AgCuSn und AgCuGa. Beispiele für ein kupferbasiertes Basismaterial sind Kupfer CuSn, CuAg, Culn, CuGa, CulnSn, CuInMb, CuGaSn. Auch ist es vorstellbar als Basismaterial NiCrMn oder SnCu zu verwenden. Bevorzugt handelt es sich bei dem Lotmaterial um eine Silber-Kupfer-Titan-Mischung, die 65 bis 75 Gew.-% und 20 bis 30 Gew.-% und Titan 2 bis 8 Gew.-% Ti, wobei Silber und Kupfer als Basismaterial in der ersten Schicht bzw. dritten Schicht und Titan als Aktivmaterial in der zweiten Schicht vorliegt und bevorzugt die Summe von Silber-Kupfer-Titan im Wesentlichen 100 Gew.- % des Lotmaterials, d. h. bis auf eine geringfüge Menge an Unreinheiten, ausmacht. Eine derartige Zusammensetzung von Silber, Kupfer und Titan ist auch unter der Bezeichnung TiCuSil^{®} bekannt, vertrieben von dem Unternehmen Morgan Advanced Materials.

Als Materialien für die Metallisierung bzw. die Metallschicht im Metall-Keramik-Substrat, sind Kupfer, Aluminium, Molybdän und/oder deren Legierungen, sowie Laminate wie CuW, CuMo, CuAl, AlCu und/oder CuCu vorstellbar, insbesondere eine Kupfer-Sandwichstruktur mit einer ersten Kupferschicht und einer zweiten Kupferschicht, wobei sich eine Korngröße in der ersten Kupferschicht von der Korngröße in einer zweiten Kupferschicht unterscheidet. Weiterhin ist bevorzugt vorgesehen, dass die mindestens eine Metallisierung, insbesondere die Bauteilmetallisierung, oberflächenmodifiziert ist. Als Oberflächenmodifikation ist beispielsweise eine Versiegelung mit einem Edelmetall, insbesondere Silber und/oder Gold, oder ENIG ("*electroless nickel immersion gold*") oder ein Kantenverguss an der ersten bzw. zweiten Metallisierungsschicht zur Unterdrückung einer Rissbildung bzw. -weitung denkbar.

Vorzugsweise weist die Keramikschicht Al₂O₃, Si₃N₄, AIN, eine HPSX-Keramik (d. h. eine Keramik mit einer Al₂O₃- Matrix, die einen x-prozentigen Anteil an ZrO₂ umfasst, beispielsweise Al₂O₃ mit 9% ZrOz = HPS9 oder Al₂O₃ mit 25% ZrOz = HPS25), SiC, BeO, MgO, hochdichtes MgO (> 90% der theoretischen Dichte), TSZ (tetragonal stabilisiertes Zirkonoxid) oder ZTA als Material für die Keramik auf. Es ist dabei auch vorstellbar, dass die Keramikschicht als Verbund- bzw. Hybridkeramik ausgebildet ist, bei der zur Kombination verschiedener gewünschter Eigenschaften mehrere Keramikschichten, die sich jeweils in Hinblick auf ihre materielle Zusammensetzung unterscheiden, übereinander angeordnet und zu einer Isolationsschicht zusammengefügt sind. Denkbar ist auch, dass zwischen zwei Keramikschichten eine metallische Zwischenschicht angeordnet ist, die vorzugsweise dicker als 1,5 mm und/oder dicker als die zwei Keramikschichten in Summe ist. Vorzugsweise wird eine möglichst wärmeleitfähige Keramik für einen möglichst geringen Wärmewiderstand verwendet.

Zweckmäßigerweise ist es vorgesehen, dass das Lotmaterial silberfrei ist. Dadurch wird in vorteilhafter Weise eine Silbermigration vermieden und/oder die Ausbildung einer schwer wegzuätzenden Silberschicht im Grenzschichtbereich zwischen Metallschicht und Keramikschicht, die insbesondere nachteilhaft ist bei der Herstellung von Strukturierungen in der Metallschicht zur Ausbildung von Leiterbahnen im Rahmen eines "second etchings". Außerdem erweist sich die Verwendung eines silberfreien Lotmaterials als besonders preisgünstig, da auf das vergleichsweise teure Silber verzichtet werden kann. Vorzugsweise handelt es sich um ein kupferbasiertes Lotmaterial. Weiterhin ist für den Fachmann als silberfrei zu verstehen, wenn ein Anteil von Silber im Lotmaterial kleiner als 2 Gew.-%, bevorzugt kleiner als Gew.- 1% und besonders bevorzugt kleiner als 0,2 Gew.-% ist. Denkbar wäre auch, dass ein Anteil von Silber im Lotmaterial kleiner als 15 Gew. - %, bevorzugt kleiner als 10 Gew. % und besonders bevorzugt kleiner als Gew.- % ist.

Gemäß einer bevorzugten Ausführungsform ist es vorgesehen, dass die Folie eine dritte Schicht aufweist, wobei die dritte Schicht das Basismaterial oder ein weiteres Basismaterial, das sich von dem Basismaterial unterscheidet, umfasst, wobei die zweite Schicht entlang einer Stapelrichtung zwischen der ersten Schicht und der dritten Schicht angeordnet ist. Dadurch ist es in vorteilhafter Weise möglich, eine Sandwichstruktur bereitzustellen, bei der vorzugsweise das Aktivmetall zwischen der ersten Schicht und der dritten Schicht angeordnet ist. Alternativ ist es vorstellbar, dass die erste Schicht und die dritte Schicht aus einem oder verschiedenen Aktivmetallen geformt sind, während die zweite Schicht das Basismaterial bereitstellt und zwischen der ersten und dritten Schicht angeordnet ist.

Gemäß einer weiteren bevorzugten Ausführungsform ist es vorgesehen, dass die erste Schicht eine erste Dicke, die zweite Schicht eine zweite Dicke und die dritte Schicht eine dritte Dicke aufweist, wobei die zweite Dicke kleiner ist als die erste Dicke und/oder die dritte Dicke, insbesondere kleiner als die Summe aus erster und dritter Dicke, wobei insbesondere ein Verhältnis der zweiten Dicke zu der ersten Dicke einen Wert zwischen 0,01 und 0,3, bevorzugt zwischen 0,01 und 0,2 und besonders bevorzugt zwischen 0,01 und 0,1 annimmt. Mit anderen Worten: die vorzugsweise Aktivmetall aufweisende oder die aus Aktivmetall bestehende zweite Schicht ist vergleichsweise dünn gegenüber der ersten und dritten Schicht. Es hat sich herausgestellt, dass bereits mit vergleichsweise kleinen Mengen an Aktivmetall, insbesondere zwischen der ersten und dritten Schicht, eine sinnvolle und wirksame Bindung zwischen den Fügepartnern, d. h. zwischen der Metallschicht und der Keramikschicht, möglich ist. Dabei hat sich zudem herausgestellt, dass auch die zweite Schicht, insbesondere wenn sie aus Aktivmetall gebildet ist, Risse haben kann bzw. nicht ununterbrochen oder durchgängig ausgebildet sein muss, um eine wirksame Bindung zwischen der Metallschicht und der Keramikschicht über das Lotmaterial bilden zu können. D. h. es ist vorstellbar, dass die zweite Schicht im Lotmaterial in einer parallel zur Haupterstreckungsebene verlaufenden Richtung Unterbrechungen aufweist.

Vorzugsweise ist es vorgesehen, dass die zweite Schicht gemustert ist und/oder Unterbrechungen aufweist. Insbesondere wird das Muster durch Aussparungen bzw. Ausnehmungen in der zweiten Schicht gebildet, die vor dem Fügen der ersten und der zweiten Schicht in die zweite Schicht eingelassen werden. Beispielsweise werden diese Aussparungen und Ausnehmungen zur Bildung einer Strukturierung oder Musterung mittels eines Prägewerkzeuges und/oder mittels eines Lasers in die zweite Schicht eingelassen, bevor die zweite Schicht mit der ersten Schicht und/oder der dritten Schicht gefügt wird. Dies erweist sich insbesondere dann als vorteilhaft, wenn das Fügen über ein Walzplattieren oder ein Plattieren erfolgt, da in einem solchen Fall aufgrund der unterschiedlichen Streckgrenzen es möglich ist, das Basismaterial aus der ersten und/oder zweiten Schicht in entsprechender Ausnehmung und/oder Aussparung in der zweiten Schicht einbrechen bzw. eindringen zu lassen, wodurch ein eigentliches Plattieren über die erste und dritte Schicht erfolgen kann. Vorzugsweise ist es vorstellbar, dass die Musterung in Abhängigkeit eines geplanten Leiterbahnmusters im gefertigten Metall-Keramik-Substrat vorgenommen wird. D. h. die Musterung entspricht im Wesentlichen einem geplanten Leitungsmuster bzw. einem Teil eines geplanten Leitungsmusters. Dadurch kann man gezielt Aktivmetall in den Bereichen ansammeln bzw. anhäufen, in denen im später gefertigten Metall-Keramik-Substrat elektrische Leiterbahnen und/oder Anschlussflächen geplant sind, während in den dazwischenliegenden Bereichen auf Aktivmetall verzichtet wird. Dies erweist sich als vorteilhaft, weil die ohnehin freizustellenden Bereiche dann einfacher zu entfernen sind, beispielsweise im Rahmen eines Ätzens, insbesondere eines "second etching". Beispielsweise ist es vorstellbar, dass das Muster derart ausgelegt ist, dass bei der Fertigung des Metall-Keramik-Substrats ein aktivmetallfreier Bereich des Lotmaterials oberhalb eines geplanten Verlaufs eine Sollbruchlinie angeordnet werden kann. Vorzugsweise umfasst das Lotmaterial eine Orientierungshilfe, um das Lotmaterial, insbesondere das Muster wunschgemäß ausrichten zu können bzw. um vor dem Strukturieren bzw. Ätzen zu erkennen, an welcher Stelle ein aktivmetallfreier Bereich angeordnet ist. Unter Unterbrechungen in der zweiten Schicht sind für den Fachmann auch Risse in der zweiten Schicht zu verstehen, die beispielsweise im Rahmen des Fügens entstehen, und die beispielswiese unkontrolliert bzw. unsystematisch in einer parallel zur Haupterstreckungsebene verlaufenden Ebene in der zweiten Schicht verteilt sind.

Vorzugsweise weist die Folie eine Schutzschicht auf, insbesondere eine in Stapelrichtung gesehen das Lotmaterial abschließende Schutzschicht. Dadurch wird das Lotmaterial vor ungewollten Oxidationen, Abrieb oder Kratzern geschützt. Dadurch lassen sich vergleichsweise hohe Lagerzeiten erzielen, die die Handhabung des Lotmaterials weiter vereinfachen. Beispielsweise handelt es sich bei den Schutzschichten um Schichten aus Kupfer, Silber, Indium, Nickel und/oder Titannickel (TiN). Solche Schutzschichten werden vorzugsweise im Rahmen eines physikalischen oder chemischen Gasphasenabscheidevorgangs realisiert.

Vorzugsweise ist es vorgesehen, dass sich die erste Dicke von der dritten Dicke unterscheidet. Dadurch lässt sich bezwecken, dass die zweite Schicht nicht mittig, sondern asymmetrisch in Richtung der Stapelrichtung innerhalb des Lotmaterials ausgerichtet ist. Dies ist dann insbesondere von Vorteil, wenn eine der Fügepartner, beispielsweise die Keramikschicht und/oder die Metallschicht, einen höheren Anteil an Aktivmaterial benötigt, um eine wirksame Bindung über das Lotmaterial zu gewährleisten.

Ein weiterer Aspekt der vorliegenden Erfindung ist ein Verfahren zur Herstellung eines erfindungsgemäßen Lotmaterials, wobei die erste Schicht und die zweite Schicht und vorzugsweise die dritte Schicht zu einer Folie zusammengesetzt, vorzugsweise zusammengefügt werden. Beispielsweise erfolgt das Herstellen im Rahmen eines Pressvorgangs, bspw. eines Walzplattierens, Sprengplattierens, Heißpressens und/oder Walzens. Dadurch sind Gesamtdicken von weniger als 20 µm möglich. Weiterhin ist es vorstellbar, dass das Zusammensetzen der ersten, der zweiten und dritten Schicht mittels eines Abscheidevorgangs, beispielsweise mittels eines physikalischen oder chemischen Gasphasenabscheidevorgangs, z. B. einem Sputtern, zu realisieren. Beispielsweise wird hierzu das Aktivmaterial auf das Basismaterial oder das Basismaterial auf das Aktivmaterial gesputtert. Dadurch lassen sich Lotfolien erzielen, die beispielsweise eine Gesamtdicke von weniger als 8 µm oder weniger als 5 µm aufweisen. Alternativ ist es vorstellbar, dass die erste Schicht, zweite Schicht und/oder dritte Schicht mittels eines galvanischen bzw. elektrochemischen Vorgangs zusammengesetzt werden. Beispielsweise kann es sich dabei um eine galvanische Wannenbeschichtung oder um ein galvanisches Walzen handeln. Dadurch lassen sich Gesamtdicken erzielen, die kleiner sind als 5 µm oder sogar 3 µm. Alle für das Lotmaterial beschriebenen Merkmale und Vorteile gelten analog für das Verfahren und andersrum.

Vorzugsweise werden beim Plattieren Ausgangsfolien für die erste Schicht, die zweite Schicht und die dritte Schicht gewählt, die bereits vor dem Fügen dünner als 100 µm, bevorzugt dünner als 80 µm und besonderes bevorzugt dünner als 50 µm sind.

Zweckmäßigerweise wird vor einem Zusammensetzen der ersten Schicht und der zweiten Schicht und vorzugsweise der dritten Schicht ein Muster in die zweite Schicht eingelassen. Eine entsprechende Musterung bzw. Strukturierung der zweiten Schicht mittels Einbringen von Ausnehmungen bzw. Aussparungen erweist sich insbesondere dann als vorteilhaft, wenn das Basismaterial der ersten Schicht und/oder der dritten Schicht in diese Aussparung der zweiten Schicht hineindringen kann, um so ein direktes Plattieren zwischen der ersten und dritten Schicht zu ermöglichen. Beispielsweise ist das Muster in der zweiten Schicht durch einen Präge- oder Stanzvorgang oder mittels eines Schneidevorgangs unter Verwendung von Laserlicht in die zweite Schicht eingelassen.

Vorzugsweise wird die Folie im Anschluss an Bildung der Folie auf der Metallschicht und/oder der Keramikschicht, die mit der Folie miteinander verbunden werden, angeordnet wird. Beispielsweise wird die Folie unmittelbar nach der Fertigung auf der Metallschicht und/oder der Keramikschicht platziert. Alternativ ist es auch vorstellbar, dass die Folie zwischengelagert wird, beispielsweise als "Coil".

Ein weiterer Gegenstand der vorliegenden Erfindung ist eine Verwendung eines erfindungsgemäßen Lotmaterials zur Anbindung einer Metallschicht an eine Keramikschicht, insbesondere zur Ausbildung eines Metall-Keramik-Substrats. Alle für das Lotmaterial beschriebenen Merkmale und Eigenschaften lassen sich analog übertragen auf die Verwendung und andersrum. Wie bereits angedeutet, erweist sich die Verwendung des erfindungsgemäßen Lotmaterials, insbesondere dann als vorteilhaft, wenn es dazu verwendet wird, Metallschichten an Keramikschichten zu verbinden, insbesondere zwecks Ausbildung eines Metall-Keramik-Substrats, das als Träger für elektrische oder elektronische Bauteile dient. Dabei ist es vorstellbar, im Rahmen der Verwendung des Lotmaterials nach dem Anordnen des Lotmaterials zwischen der Keramikschicht und der Metallschicht das Ensemble aus Keramikschicht, Metallschicht und Lotmaterial einer Temperaturbehandlung auszusetzen. Dabei ist es vorstellbar, dass die Temperaturbehandlung eine zeitliche Variation in der Temperaturentwicklung umfasst, beispielsweise die Nutzung von rampenartigen Temperaturverläufen während des Anbindungsprozesses. Vorzugsweise wird eine Arbeitstemperatur von etwa 900°C verwendet. Vorzugsweise wird beim Anbindungsprozess eine Arbeitstemperatur von 650 °C und 1050 °C, bevorzugt zwischen 700 °C und 1000 °C und besonders bevorzugt zwischen 750 °C und 950 °C verwendet.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
- **Fig.1:**: eine schematische Darstellung einer Keramikschicht, eines Lotmaterials und einer Metallschicht,
- **Fig.2:**: ein Lotmaterial gemäß einer bevorzugten Ausführungsform der vorliegenden Erfindung,
- **Fig.3**: ein Verfahren zur Herstellung eines Lotmaterials gemäß einer ersten bevorzugten Ausführungsform der vorliegenden Erfindung,
- **Fig.4**: ein Verfahren zur Herstellung eines Lotmaterials gemäß einer zweiten bevorzugten Ausführungsform der vorliegenden Erfindung,
- **Fig.5**: ein Verfahren zur Herstellung eines Lotmaterials gemäß einer dritten bevorzugten Ausführungsform der vorliegenden Erfindung und
- **Fig.6**: ein Verfahren zur Herstellung eines Lotmaterials gemäß einer vierten bevorzugten Ausführungsform der vorliegenden Erfindung.

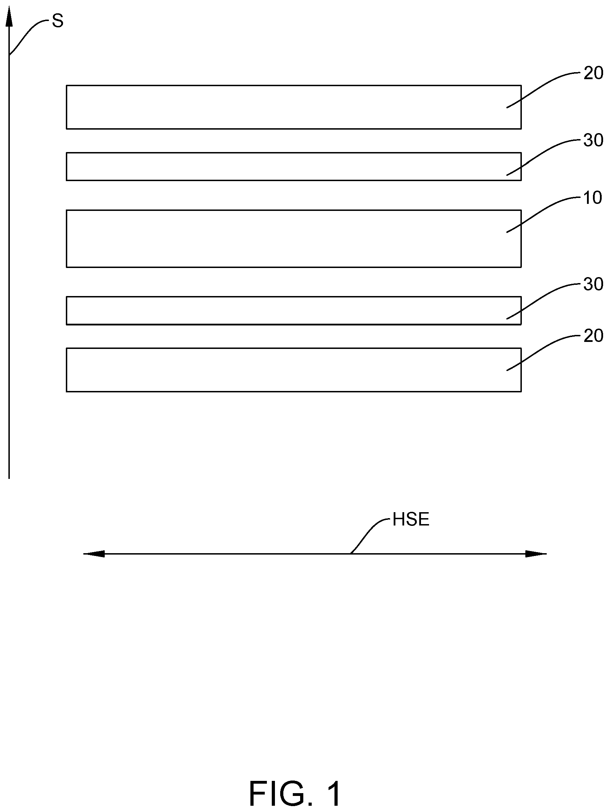

In **Figur 1** sind einer Keramikschicht 10 und eine Metallschicht 20 dargestellt, die mit einem Lotmaterial 30 verbunden werden sollen. Ein solches Lotmaterial 30 wird bevorzugt für einen Aktivlötprozess verwendet, bei dem eine Metallschicht 20 an eine Keramikschicht 10 zur Ausbildung eines Metall-Keramik-Substrats angebunden wird. Die Metallschicht 20 und die Keramikschicht 10 erstrecken sich dabei entlang einer Haupterstreckungsebene HSE und werden entlang einer senkrecht zur Haupterstreckungsebene HSE verlaufenden Stapelrichtung S übereinander gestapelt. Insbesondere handelt es sich hierbei um ein Lotmaterial 30 in Form einer Folie. Dabei erfolgt die Verbindung der einzelnen Fügepartner, d. h. der Metallschicht 20 und der Keramikschicht 10, bei einer für das jeweilige Lotmaterial 30 vorgesehenen Arbeitstemperatur, beispielsweise 900 °C. Hierbei bildet das in dem Lotmaterial 30 enthaltende Aktivmetall mit der zu fügenden Oberfläche, insbesondere der Oberfläche der Keramikschicht 10, eine Reaktionsschicht aus. Diese Reaktionsschicht wird wiederum von dem Basismaterial benetzt. Auf diese Weise kann im Rahmen des Aktivlotprozesses die Anbindung zwischen einer Metallschicht 20 und einer Keramikschicht 10 realisiert werden, sofern sie den während des Verbindungs- bzw. Lötprozesses herrschenden Temperaturen standhalten. Insbesondere ist es vorgesehen, dass zur Anbindung das Lotmaterial 30 zwischen der Metallschicht 20 und der Keramikschicht 10 angeordnet wird.

Nach dem Fügen der Metallschicht 20 und der Keramikschicht 10 wird die Metallschicht 20 strukturiert, beispielsweise durch Ätzen, Laserlicht und/oder Fräsen, um Leiterbahnen und/oder Anschlussflächen auszubilden, wodurch das Metall-Keramik-Substrat als Leiterplatte genutzt werden kann.

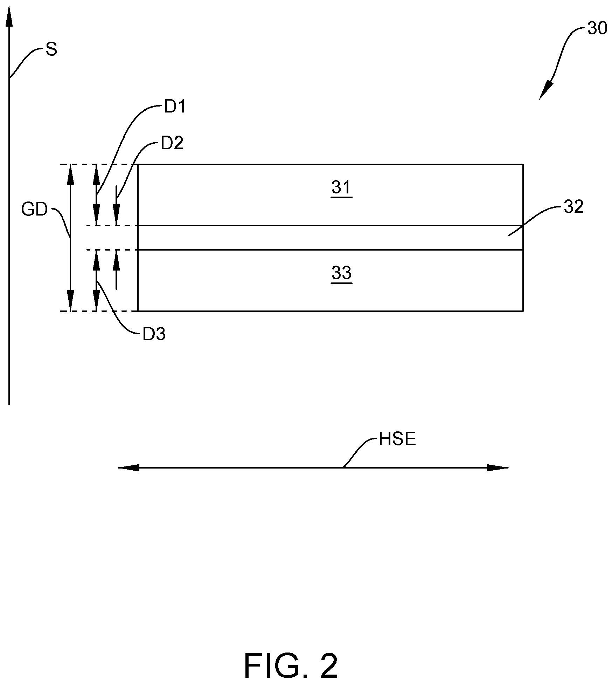

In **Figur 2** ist ein Lotmaterial 30 gemäß einer bevorzugten Ausführungsform der vorliegenden Erfindung dargestellt. Insbesondere umfasst das Lotmaterial 30 eine erste Schicht 31 und eine zweite Schicht 32. Dabei ist das als Folie bereitgestellte Lotmaterial 30 zusammengesetzt aus einer ersten Schicht 31 aus einem Basismaterial und einer zweiten Schicht 32 aus einem Aktivmaterial. Vorzugsweise umfasst das Lotmaterial 30 eine dritte Schicht 33, wobei insbesondere die zweite Schicht 32 aus dem Aktivmaterial zwischen der ersten Schicht 31 aus dem Basismaterial und der dritten Schicht 33 aus dem Basismaterial und/oder aus einem vom Basismaterial der ersten Schicht 31 unterschiedlichen weiteren Basismaterial angeordnet ist. Mit anderen Worten: die erste Schicht 31, die zweite Schicht 32 und die dritte Schicht 33 bilden eine Sandwichstruktur, insbesondere eine Trimetallstruktur. Alternativ ist es vorstellbar, dass die erste Schicht 31 und die dritte Schicht 33 aus demselben oder verschiedenen Aktivmaterialien geformt sind, während zwischen der ersten Schicht 31 und der dritten Schicht 33 aus Aktivmaterial in Gestalt der zweiten Schicht 32 das Basismaterial angeordnet ist. In diesem Fall sind die erste Schicht 31 und die dritte Schicht 33 vorzugsweise von einer weiteren Schutzschicht umgeben bzw. ummantelt.

Vorzugsweise ist es vorgesehen, dass die erste Schicht 31, die zweite Schicht 32 und die dritte Schicht 33 in einer Stapelrichtung S gesehen übereinander angeordnet sind, wobei in Stapelrichtung S bemessen die erste Schicht 31 eine erste Dicke D1, die zweite Schicht 32 eine zweite Dicke D2 und die dritte Schicht 33 eine dritte Dicke D3 aufweist. Dabei ist es insbesondere vorgesehen, dass ein Verhältnis der zweiten Dicke D2 zu der ersten Dicke D1 und/oder zu der dritten Dicke D3 einen Wert zwischen 0,01 und 0,3, bevorzugt zwischen 0,01 und 0,2 und besonders bevorzugt zwischen 0,01 und 0,1 annimmt. Weiterhin ist es vorstellbar, dass sich die erste Dicke D1 von der dritten Dicke D3 unterscheidet, sodass die zweite Schicht 32 in Richtung der Stapelrichtung S gesehen nicht mittig, sondern asymmetrisch im Verbund aus erster Schicht 31, zweiter Schicht 32 und dritter Schicht 33 angeordnet ist.

Es ist vorgesehen, dass die Folie eine Gesamtdicke GD aufweist, die kleiner als 25 µm und besonders bevorzugt kleiner als 15 µm ist. Dabei bemisst sich die Gesamtdicke GD von der Folie vorzugsweise entlang der Stapelrichtung S von den Außenseiten, die während des Anbindungsverfahrens an der Keramikschicht 10 bzw. der Metallschicht 20 anliegen bzw. an ihnen angrenzen. Derartig dünne Lotmaterialien 30 erweisen sich nicht nur vorteilhaft wegen des reduzierten Materialaufwandes, sondern auch in Hinblick auf eine Distanz, welche das Aktivmaterial zu überwinden hat, um an die Grenzschicht zwischen Lotmaterial 30 und Keramikschicht 10 bzw. Lotmaterial 30 und Metallschicht 20 zu gelangen. Dadurch kann sichergestellt werden, dass ausreichend Aktivmaterial in den Grenzbereich zur Keramikschicht 10 bzw. Metallschicht 20 gelangt, um dort die Reaktionsschicht auszubilden. Dies erweist sich wiederum zusätzlich als vorteilhaft für die Menge an Aktivmaterial, die für eine erfolgreiche Bindung zwischen der Metallschicht 20 und der Keramikschicht 10 benötigt wird.

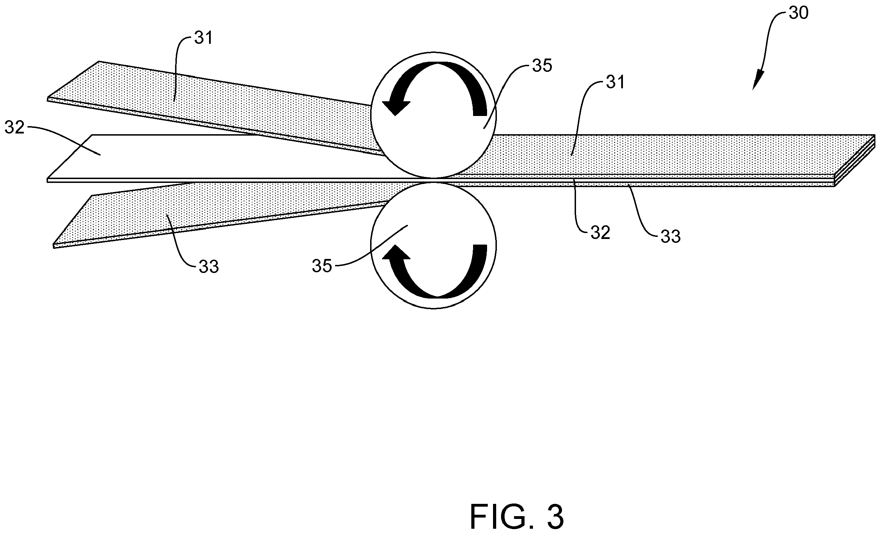

In **Figur 3** ist ein Verfahren zur Herstellung des Lotmaterials 30 gemäß einer ersten beispielhaften Ausführungsform der vorliegenden Erfindung dargestellt. Insbesondere sieht es das Verfahren aus dem Ausführungsbeispiel der Figur 3 vor, dass die erste Schicht 31, die zweite Schicht 32 und die dritte Schicht 33 bereitgestellt werden und unter Verwendung von Walzen 35 in einem Walzplattiervorgang zusammengefügt werden. Vorzugsweise werden dabei Ausgangsfolien für die erste Schicht 31, die zweite Schicht 32 und die dritte Schicht 33 gewählt, die bereits vor dem Fügen dünner als 200 µm, bevorzugt dünner als 100 µm und besonderes bevorzugt dünner als 50 µm sind.

Beispielsweise ist es vorstellbar als zweite Schicht 32 eine Titan Grade 1 oder eine Titan 4N Schicht zu verwenden, die bspw. eine zweite Dicke D2 von 10 µm aufweist. Das im Rahmen des Walzplattierens bzw. des Walzschritts zusammengefügte Ensemble aus erster Schicht 31, zweiter Schicht 32 und dritter Schicht 33 bildet aufgrund des Walzplattierens eine Lotfolie bzw. ein Lotmaterial 30, dessen Gesamtdicke GD halb so groß ist, wie die summierte Dicke der ersten Schicht 31, der zweiten Schicht 32 und der dritten Schicht 33 vor dem Fügen. Besonders bevorzugt ist es vorgesehen, dass in Anschluss an den für das Fügen vorgesehenen Walzschritt, d. h. einen Fügewalzschritt, mindestens ein weiterer Walzschritt, bevorzugt mehrere weitere Walzschritte, vorgesehen sind, um die Gesamtdicke GD des Lotmaterials 30 weiter zu reduzieren. Insbesondere bei der Verwendung von zweiten Schichten 32, vorzugsweise zweiten Schichten 32 aus Aktivmaterial, zwischen einer ersten Schicht 31 und einer dritten Schicht 33, vorzugsweise aus dem Basismaterial bzw. weiteren Basismaterial, werden durch das Walzplattieren bzw. das wiederholte Walzplattieren Risse in der zweiten Schicht 32 entstehen. Es hat sich herausgestellt, dass ein erfolgreiches Binden von Metallschicht 20 und Keramikschicht 10 trotz dieser Risse bzw. Unterbrechungen möglich ist.

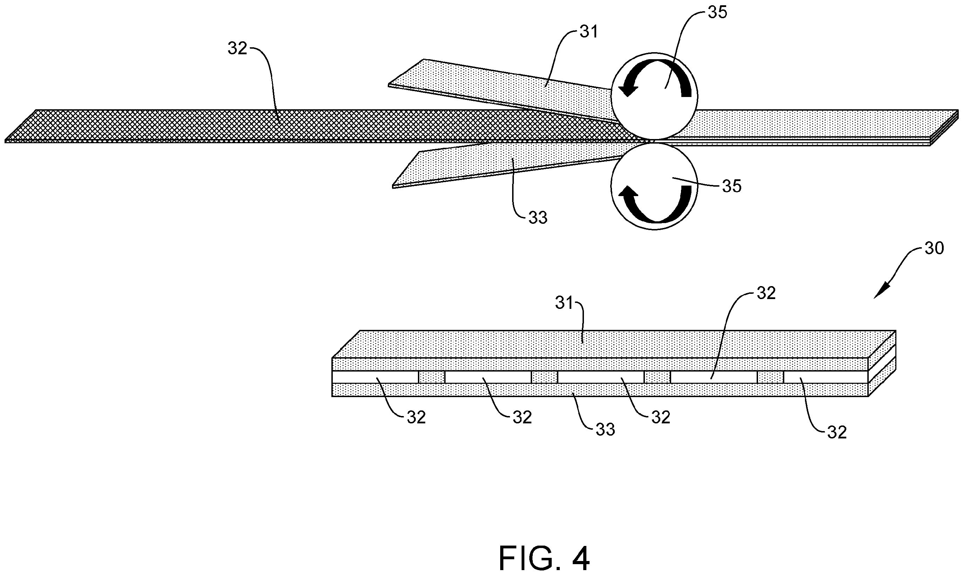

In **Figur 4** ist ein Verfahren zur Herstellung eines Lotmaterials 30 gemäß einer zweiten beispielhaften Ausführungsform der vorliegenden Erfindung dargestellt. Dabei nutzt das Ausführungsbeispiel abermals ein Walzplattieren zum Fügen der ersten Schicht 31, der zweiten Schicht 32 und der dritten Schicht 33 zu dem Lotmaterial 30. Das Verfahren aus der Figur 4 unterscheidet sich von dem Verfahren aus der Figur 3 dahingehend, dass die zweite Schicht 32 strukturiert ist, das heißt gemustert ist bzw. gezielt eingelassene Unterbrechungen aufweist. Insbesondere sind in die zweite Schicht 32 Ausnehmungen bzw. Aussparungen bzw. Unterbrechungen eingelassen, in die die erste Schicht 31 und/oder die dritte Schicht 33 während des Walzplattierens eindringen kann bzw. verdrängt werden kann. Dies erweist sich insbesondere dann als vorteilhaft, wenn das Basismaterial bzw. die Wahl des Basismaterials dazu führt, dass sich die erste Schicht 31 bzw. die dritte Schicht 33 von der zweiten Schicht 32 hinsichtlich ihrer Streckgrenzen voneinander unterscheidet. Durch die Nutzung der Ausnehmung bzw. der Aussparung in der zweiten Schicht 32 kann dann in vorteilhafter Weise die zweite Schicht 32, insbesondere die als Aktivmaterialschicht ausgebildete zweite Schicht 32 während des Walzplattierens hineinbrechen und der eigentliche Plattierungsvorgang erfolgt über die erste Schicht 31 und dritte Schicht 33 in den Bruchzonen, d. h. den Bereichen zwischen zwei Ausnehmungen bzw. Aussparungen bzw. Unterbrechungen der zweiten Schicht 32. Zur Ausbildung des Musters oder der Strukturierung in der zweiten Schicht 32 wird bspw. ein Sägewerkzeug oder ein Laser verwendet. Alternativ zum Walzplattieren kann auch ein Sprengplattieren, Heißpressen und/oder Walzen verwendet werden. Mittels dieses Verfahrens lassen sich Gesamtdicken GD für Lotfolien erzielen, die kleiner als 20 µm sind.

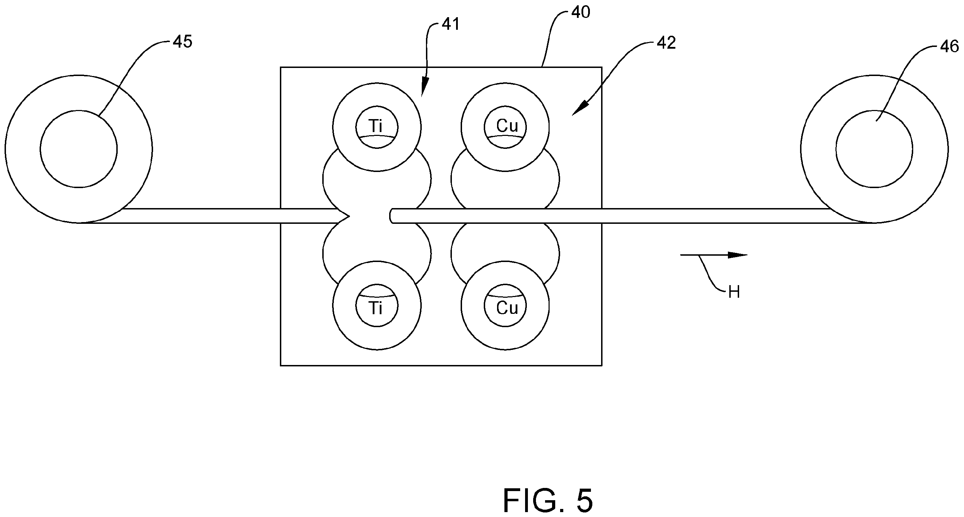

In **Figur 5** ist ein Verfahren zur Herstellung eines Lotmaterials 30 gemäß einer dritten beispielhaften Ausführungsform dargestellt. In dem dargestellten Ausführungsbeispiel passiert die zweite Schicht 32 eine Beschichtungsvorrichtung 40. Hierzu wird die zweite Schicht 32, die insbesondere aus Basismaterial oder Aktivmetall bzw. Aktivmaterial, gebildet ist, von einer ersten Rolle 45 abgewickelt und anschließend entlang einer Vorderrichtung F befördert, um nach Verlassen der Beschichtungsvorrichtung 40 auf einer zweite Rolle 46 aufgewickelt zu werden.

Die Beschichtungsvorrichtung 40 beschichtet vorzugsweise eine Vorder- und/oder eine Rückseite der zweiten Schicht 32 mittels eines Abscheidevorgangs, insbesondere eines chemischen oder physikalischen Gasphasenabscheidevorgangs, wie z. B. einem Sputtern. In dem in Figur 5 dargestellten Ausführungsbeispiel wird mittels einer ersten Abscheidevorrichtung 41 Aktivmaterial in Form von Titan auf die Außenseiten der zweiten Schicht 32 aufgetragen. Im Anschluss ans Auftragen des Aktivmaterials erfolgt eine zusätzliche Beschichtung mittels einer weiteren Gasphasenabscheidung durch eine zweite Abscheidevorrichtung 42, die das Aktivmaterial wiederum mit einer Schutzschicht, vorzugsweise in Form von Kupfer, bedeckt. Vorzugsweise erfolgt der Gasphasenabscheidevorgang der ersten Abscheidevorrichtung 41 und/oder der zweiten Abscheidevorrichtung 42 beidseitig an der zweiten Schicht 32, die entlang der zweiten Förderrichtung F bewegt wird.

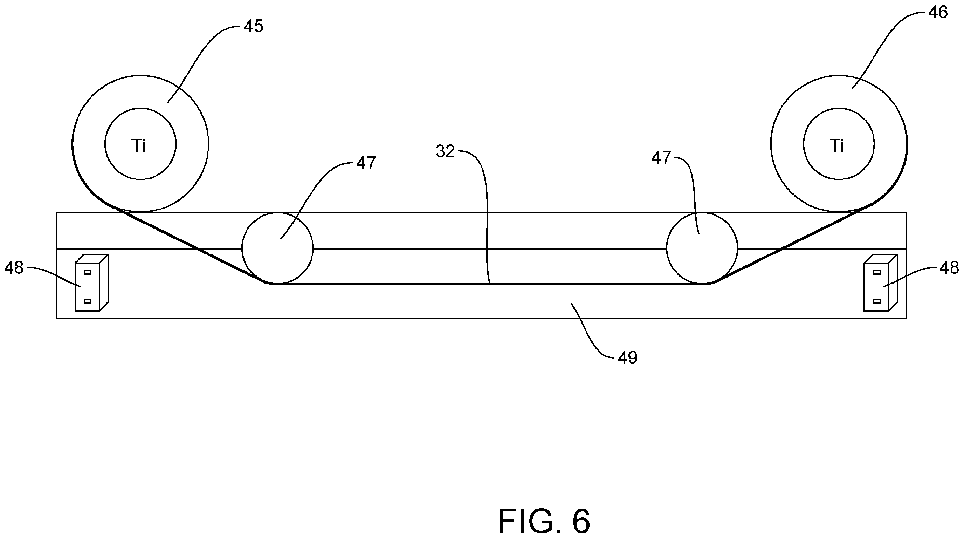

In **Figur** 6 ist ein Verfahren zur Herstellung eines Lotmaterials 30 gemäß einer vierten beispielhaften Ausführungsform dargestellt. Insbesondere ist es hierbei vorgesehen, dass die erste Schicht 31 und die dritte Schicht 33 galvanisch bzw. elektrochemisch auf die zweite Schicht 32 aufgetragen wird bzw. werden. Dabei handelt es sich vorzugsweise bei der zweiten Schicht 32 um eine Aktivmetallfolie. Die auf der ersten Rolle 45 aufgerollte zweite Schicht 32 wird dann abgerollt und über Umlenkrollen 47 durch ein Gefäß geführt, in dem sich ein galvanisches Medium 49 und Elektroden 48 befindet.

Zusammen mit den Elektroden 48 und dem galvanischen Medium 49 wird so dafür gesorgt, dass die zweite Schicht 32 mit dem entsprechenden Basismaterial bedeckt wird, sodass sich die erste Schicht 31 und die zweite Schicht 32 aus Basismaterial ausbildet. Dadurch lassen sich in vorteilhafter Weise Lotfolien 30 produzieren, deren Gesamtdicke GD kleiner ist als 5 µm oder sogar 3 µm.

### Bezugszeichenliste:

- 10: Keramikschicht
- 20: Metallschicht
- 30: Lotmaterial
- 31: erste Schicht
- 32: zweite Schicht
- 33: dritte Schicht
- 35: Walze
- 40: Beschichtungsvorrichtung
- 41: erste Abscheidevorrichtung
- 42: zweite Abscheidevorrichtung
- 45: erste Rolle
- 46: zweite Rolle
- 48: Elektrode
- 47: Umlenkrolle
- 49: galvanisches Medium
- F: Förderrichtung
- S: Stapelrichtung
- HSE: Haupterstreckungsebene
- D1: erste Dicke
- D2: zweite Dicke
- D3: dritte Dicke
- GD: Gesamtdicke

## Patentansprüche

1. Lotmaterial (30) für das Anbinden einer Metallschicht (20) an eine Keramikschicht (10), insbesondere zur Ausbildung eines Metall-Keramik-Substrats als Träger für elektrische Bauteile, umfassend:
- ein Basismaterial und
- ein Aktivmetall,
wobei das Lotmaterial (30) eine Folie ist, die das Basismaterial in einer ersten Schicht (31) und das Aktivmetall in einer zweiten Schicht (32) aufweist, und
wobei die Folie eine Gesamtdicke (GD) aufweist, die kleiner als 25 µm ist.

2. Lotmaterial (30) gemäß Anspruch 1, wobei die Folie eine Gesamtdicke aufweist, die kleiner als 15 µm ist.

3. Lotmaterial (30) gemäß Anspruch 1, wobei die Folie eine dritte Schicht (33) aufweist, wobei die dritte Schicht (33) das Basismaterial oder ein weiteres Basismaterial umfasst, wobei die zweite Schicht (32) entlang einer Stapelrichtung (S) zwischen der ersten Schicht (31) und der dritten Schicht (33) angeordnet ist.

4. Lotmaterial (30) gemäß einem der vorhergehenden Ansprüche, wobei die erste Schicht (31) eine erste Dicke (D1), die zweite Schicht (32) eine zweite Dicke (D2) und die dritte Schicht (33) eine dritte Dicke (D3) aufweist, wobei die zweite Dicke (D2) dünner als die erste Dicke (D1) und/oder die dritte Dicke (D3) ist, wobei insbesondere ein Verhältnis der zweiten Dicke (D2) zu der ersten Dicke (D1) einen Wert zwischen 0,01 und 0,3.

5. Lotmaterial (30) gemäß Anspruch 4, wobei ein Verhältnis der zweiten Dicke (D2) zu der ersten Dicke (D1) einen Wert zwischen 0,01 und 0,2 und besonders bevorzugt zwischen 0,01 und 0,1 annimmt.

6. Lotmaterial (30) gemäß einem der vorhergehenden Ansprüche, wobei die zweite Schicht (32) mit einem Muster aus Aussparungen oder Ausnehmungen gemustert ist und/oder Unterbrechungen aufweist.

7. Lotmaterial (30) gemäß einem der vorhergehenden Ansprüche, wobei die Folie eine Schutzschicht, insbesondere eine in Stapelrichtung (S) gesehen das Lotmaterial (30) abschließende Schutzschicht, aufweist.

8. Lotmaterial (30) gemäß einem der Ansprüche 2 bis 7, wobei sich die erste Dicke (D1) von der dritten Dicke (D3) unterscheidet.

9. Verfahren zur Herstellen eines Lotmaterials (30) gemäß einem der vorhergehenden Ansprüche, wobei die erste Schicht (31) und die zweite Schicht (32) und vorzugsweise die dritte Schicht (33) zu einer Folie zusammengefügt werden.

10. Verfahren gemäß Anspruch 9, wobei vor einem Zusammensetzen der ersten Schicht (31) und der zweiten Schicht (32) und vorzugsweise der dritten Schicht (33) ein Muster aus Aussparungen oder Ausnehmungen in die zweite Schicht (32) eingelassen wird.

11. Verwendung eines Lotmaterials (30) gemäß einem der Ansprüche 1 bis 8 zur Anbindung einer Metallschicht (20) an eine Keramikschicht (10), insbesondere zur Ausbildung eines Metall-Keramik-Substrats.

12. Verwendung gemäß Anspruch 11, wobei die Folie im Anschluss an Bildung der Folie auf der Metallschicht (20) und/oder der Keramikschicht (10), die mit der Folie miteinander verbunden werden, angeordnet wird.

## Claims

1. A solder material (30) for bonding a metal layer (20) to a ceramic layer (10), in particular for forming a metal-ceramic substrate as a carrier for electrical components, comprising:
- a basic material and
- an active metal,
wherein the solder material (30) is a foil having the basic material in a first layer (31) and the active metal in a second layer (32), and
wherein the foil has an overall thickness (GD) that is less than 25 µm.

2. The solder material (30) according to claim 1, wherein the foil has an overall thickness that is less than 15 µm.

3. The solder material (30) according to claim 1, wherein the foil comprises a third layer (33), wherein the third layer (33) comprises the basic material or further basic material, wherein the second layer (32) is arranged along a stacking direction (S) between the first layer (31) and the third layer (33).

4. The solder material (30) according to any one of the preceding claims, wherein the first layer (31) has a first thickness (D1), the second layer (32) has a second thickness (D2), and the third layer (33) has a third thickness (D3), wherein the second thickness (D2) is thinner than the first thickness (D1) and/or the third thickness (D3), wherein, in particular, a ratio of the second thickness (D2) to the first thickness (D1) has a value between 0.01 and 0.3.

5. The solder material (30) according to claim 4, wherein a ratio of the second thickness (D2) to the first thickness (D1) has a value between 0.01 and 0.2, and most preferably between 0.01 and 0.1.

6. The solder material (30) according to any one of the preceding claims,
wherein the second layer (32) is patterned with a pattern of recesses or cutouts and/or has discontinuities.

7. The solder material (30) according to any one of the preceding claims,
wherein the foil has a protective layer, in particular a protective layer that ends the solder material (30) as viewed in the stacking direction (S).

8. The solder material (30) according to any one of claims 2 to 7, wherein the first thickness (D1) is different from the third thickness (D3).

9. A method of producing a solder material (30) according to any one of the preceding claims, wherein the first layer (31) and the second layer (32) and preferably the third layer (33) are joined together to form a foil.

10. The method according to claim 9, wherein prior to assembling the first layer (31) and the second layer (32), and preferably the third layer (33), a pattern of recesses or voids is left in the second layer (32).

11. An Use of a solder material (30) according to any one of claims 1 to 8 for bonding a metal layer (20) to a ceramic layer (10), in particular for forming a metal-ceramic substrate.

12. The use according to claim 11, wherein the foil is arranged subsequent to the formation of the foil on the metal layer (20) and/or the ceramic layer (10), which are bonded together with the foil.

## Revendications

1. Matériau de brasage (30) pour lier une couche métallique (20) à une couche céramique (10), en particulier pour réaliser un substrat métal-céramique en tant que support pour des composants électriques, comprenant :
- un matériau de base et
- un métal actif,
le matériau de brasage (30) étant une feuille qui comprend le matériau de base dans une première couche (31) et le métal actif dans une deuxième couche (32), et
la feuille présentant une épaisseur totale (GD) inférieure à 25 µm.

2. Matériau de brasage (30) selon la revendication 1,
dans lequel la feuille présente une épaisseur totale inférieure à 15 µm.

3. Matériau de brasage (30) selon la revendication 1,
dans lequel la feuille comprend une troisième couche (33), la troisième couche (33) comprenant le matériau de base ou un autre matériau de base, la deuxième couche (32) étant disposée le long d'une direction d'empilement (S) entre la première couche (31) et la troisième couche (33).

4. Matériau de brasage (30) selon l'une des revendications précédentes,
dans lequel la première couche (31) présente une première épaisseur (D1), la deuxième couche (32) présente une deuxième épaisseur (D2), et la troisième couche (33) présente une troisième épaisseur (D3), la deuxième épaisseur (D2) étant plus mince que la première épaisseur (D1) et/ou plus mince que la troisième épaisseur (D3),
en particulier, un rapport de la deuxième épaisseur (D2) sur la première épaisseur (D1) prend une valeur comprise entre 0,01 et 0,3.

5. Matériau de brasage (30) selon la revendication 4,
dans lequel un rapport de la deuxième épaisseur (D2) sur la première épaisseur (D1) prend une valeur comprise entre 0,01 et 0,2 et de manière particulièrement préférée entre 0,01 et 0,1.

6. Matériau de brasage (30) selon l'une des revendications précédentes,
dans lequel la deuxième couche (32) présente un motif formé d'échancrures ou d'évidements et/ou présente des interruptions.

7. Matériau de brasage (30) selon l'une des revendications précédentes,
dans lequel la feuille présente une couche de protection, en particulier une couche de protection fermant le matériau de brasage (30), vu dans la direction d'empilement (S).

8. Matériau de brasage (30) selon l'une des revendications 2 à 7,
dans lequel la première épaisseur (D1) se distingue de la troisième épaisseur (D3).

9. Procédé de fabrication d'un matériau de brasage (30) selon l'une des revendications précédentes,
dans lequel la première couche (31) et la deuxième couche (32), et de préférence la troisième couche (33), sont assemblées en une feuille.

10. Procédé selon la revendication 9,
dans lequel, avant l'assemblage de la première couche (31) et de la deuxième couche (32), et de préférence de la troisième couche (33), un motif formé d'échancrures ou d'évidements est ménagé dans la deuxième couche (32).

11. Utilisation d'un matériau de brasage (30) selon l'une des revendications 1 à 8 pour lier une couche métallique (20) à une couche céramique (10), en particulier pour réaliser un substrat métal-céramique.

12. Utilisation selon la revendication 11,
dans laquelle, une fois la feuille formée, la feuille est disposée sur la couche métallique (20) et/ou sur la couche céramique (10) qui sont reliées l'une à l'autre avec la feuille.
